# EUROPEAN PATENT APPLICATION

(11) **EP 3 041 209 A1**
(43) Date of publication of application: **06.07.2016**
(21) Application number: 14307202.3
(22) Date of filing: 29.12.2014
(51) Int. Cl.: H04M 3/436, H04L 29/06

(54) **A method and system for managing an incoming call**

(71) Applicant: ALCATEL LUCENT, 92100 Boulogne-Billancourt (FR)
(72) Inventor: Martin, Antony, 91620 Nozay (FR); Papillon, Serge, 91620 Nozay (FR)
(74) Representative: Berthier, Karine

(57) **Abstract**

A method for managing an incoming call (IC) originating from a caller terminal (C1) operated by a first end user, said incoming call (IC) being addressed to a called terminal (C2) operated by a second end user, said method comprising the following steps performed by an interactive voice system (IVS):
- receiving (401) a first notification (N1) from the called terminal (C2) for taking (403) the incoming call (IC),
- requesting (405) to the caller terminal (C1), through a request for information (RI), information related to the identity of the first end user,
- receiving (407) a set of information (SI) from the caller terminal (C1), said set of information (SI) being related to the identity of the first end user,
- providing (409) unidirectionally to the called terminal (C2) at least a portion (PSI) of the set of information (SI),
- receiving (411) a second notification (N2) from the called terminal (C2) for managing (413) the incoming call (IC), said second notification (N2) being determined according to the at least portion (PSI) of the set of information (SI).

## Description

### BACKGROUND OF THE INVENTION

The realm of telecommunication has evolved drastically for the last decades, driven by new technologies and new habits of consumers. It is nowadays common practice for a person to rely on numerous technological channels to get in touch with others or to be contacted, and as such it is becoming more and more complex to safely guarantee privacy. Social networks with trends to share personal information, either deliberately or not, have rendered easy the collection of contact information for example. The profile of a customer, that comprises his postal or electronic addresses, phone numbers etc, is a valuable asset. It happens often that large database comprising customers profiles are bought and/or sell from companies to companies for marketing or commercial purpose. Customers may then be subject to unsolicited phone calls, that incomes with a private number or a generic phone number from an automated phone switchboard, said numbers being unknown from the called customer. It may also happen that a user receives an incoming call from a trusted caller, but with an unknown number or identifier. It may be the case for example if a contact person from the user has recently changed his subscription to a new mobile network operator, or if said contact person uses a communication mean different than the usual one.

It is a complex issue for a user to manage unsolicited calls, and often with random results. For example an incoming call from an unknown phone number may be issued by a telemarketer, but also from an originator that could be of interest for the user, such as his relatives or the bank. The user is not able to distinguish without taking the incoming call, which can potentially harm his privacy, or letting the caller ending up on the voice mail. Similar problem arises with an incoming call from a private phone number, which the user can not know if it could be of interest for him or not. There exist some solutions for managing a white list or a black list of phone numbers. Such management of list is performed subsequently to the incoming call, implying that the user had to perform an action like taking the incoming call, which might be not satisfactory in case said call is for commercial purpose, or rejecting said incoming call which could have been an important call. Others remedies involve inline solution serially connected to a fixed line. It can be a dedicated box acting as an enhanced answering machine, allowing the user to route an incoming call to a particular feature of the box. Drawbacks of such solution are that it requires the user manual configuration, requires also the user to be in proximity with the box, and is dedicated to fixed land line. It is a local inline solution that does not fit the various means of communication that may be used by the user.

As presented above, current solutions are lacking of efficiency and flexibility and render the privacy of the user not guaranteed. It is then needed to offer to the user a practical solution for managing unknown incoming calls. Said solution should fit the various means of communication and allow the user to act upon an unknown call without endangering his privacy and also ensuring that he won't miss unknown calls that are of interest for him.

### SUMMARY OF THE INVENTION

The invention aims to remedy all or some of the disadvantages of the above identified prior art. It particularly proposes ways for managing incoming call.

A first aspect of the invention relates then to a method for managing an incoming call originating from a caller terminal operated by a first end user, said incoming call being addressed to a called terminal operated by a second end user, said method comprising the following steps performed by an interactive voice system:
- receiving a first notification from the called terminal for taking the incoming call,
- requesting to the caller terminal, through a request for information, information related to the identity of the first end user,
- receiving a set of information from the caller terminal, said set of information being related to the identity of the first end user,
- providing unidirectionally to the called terminal at least a portion of the set of information,
- receiving a second notification from the called terminal for managing the incoming call, said second notification being determined according to the at least portion of the set of information.

Thus, thanks to these features, the method enables the interactive voice system to manage the incoming call addressed to the called terminal. The method performed by the interactive voice system involves separate interactions between said interactive voice system and the respective caller terminal and called terminal. The steps of taking the incoming call according to the first notification and of managing the incoming call according to the second notification involve only cooperation between the interactive voice system and the called terminal. The management of the incoming call is then achieved without the direct interaction between the caller terminal and the called terminal. It enables the second end user to efficiently preserve his privacy by not having to interact directly with the first end user.

According to various embodiments, such method comprises one or more of the features below, which should be considered in any possible technical combinations:
- the step of providing unidirectionally to the called terminal the at least portion of the set of information, a step of parking the incoming call on a park server is performed,
- the step of managing the incoming call comprises a step of handing over the incoming call to the called terminal,
- the step of managing the incoming call further comprises a step of parking the incoming call on the park server is performed,
- the step of managing the incoming call further comprises a step of requesting call back information from the caller terminal,
- upon the step of managing the incoming call, a step of updating an incoming call management list is performed,
- the at least portion of the set of information comprises a voice to text conversion of a voice speech related to the identity of the first end user,
- the request for information is adapted according to the available information related to the caller terminal,
- the step of requesting to the caller terminal information related to the identity of the first end user further comprises a step of analyzing the environment of the caller terminal,
- the step of analyzing the environment of the caller terminal further comprises steps selected from the group consisting of a step of voice recognizing, a step of noise environment analyzing, a step of date and time determining, a step of localizing and a step of accuracy determining,
- the incoming call management list comprises a set of rules related to the environment of the caller terminal, and wherein the step of analyzing the environment further comprises a step of filtering the incoming call according to said set of rules,
- the step of analyzing the environment of the caller terminal further comprises a step of providing the result of said step of analyzing the environment of the caller terminal to the called terminal,

A second aspect of the invention relates then to an interactive voice system for managing an incoming call originating from a caller terminal operated by a first end user, said incoming call being addressed to a called terminal operated by a second end user, said interactive voice system comprising:
- a system management module adapted:
   o for processing a first notification from the called terminal for taking the incoming call,
   o for requesting to the caller terminal, through a request for information, information related to the identity of the first end user,
   o for receiving the set of information from the caller terminal,
   o for providing unidirectionally to the called terminal at least a portion of the set of information,
   o for processing a second notification from the called terminal for managing the incoming call, said second notification being determined according to the at least portion of the set of information ,
- a call management module adapted:
   o for taking the incoming call,
   o for managing the incoming call.

Thus, thanks to these features, the interactive voice system is enabled to manage incoming call addressed to the called terminal. The interactive voice system interacts separately with the respective caller terminal and called terminal. The cooperation between the called terminal and the interactive voice system advantageously allows the called terminal not to be in direct interaction with the caller terminal. The interactive voice system offers functionalities and means to the called terminal for managing the incoming call with guaranteeing the privacy of the second end user. The interactive voice system is advantageous to cooperate with either the caller terminal and/or the called terminal which provides a flexible solution to manage incoming calls.

According to various embodiments, such method comprises one or more of the features below, which should be considered in any possible technical combinations:
- the interactive voice system is comprised in an Internet Protocol Multimedia Subsystem "IMS" architecture,
- the interactive voice system is comprised in a voice mail system.

Thus, thanks to these features, the interactive voice system is enabled to cooperate with Internet Multimedia Subsystem architecture and compatible devices which offers a broad variety of use. The interactive voice system is also enabled to cooperate with a voice mail system. Said interactive voice system is then a flexible solution to manage incoming call.

### BRIEF DESCRIPTION OF THE FIGURES

Some embodiments of the present invention are now described, by way of example only, and with reference to the accompanying drawings, in which:
- FIG. 1 is a schematic block diagram of a communication network comprising an embodiment of an interactive voice system according to the invention,
- FIG. 2 is a schematic block diagram of an embodiment of an interactive voice system according to the invention,
- FIG. 3 is a flowchart showing messages exchanged in an embodiment of an interactive voice system according to the invention,
- FIG. 4 is a flowchart showing steps performed in an embodiment of the method according to the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

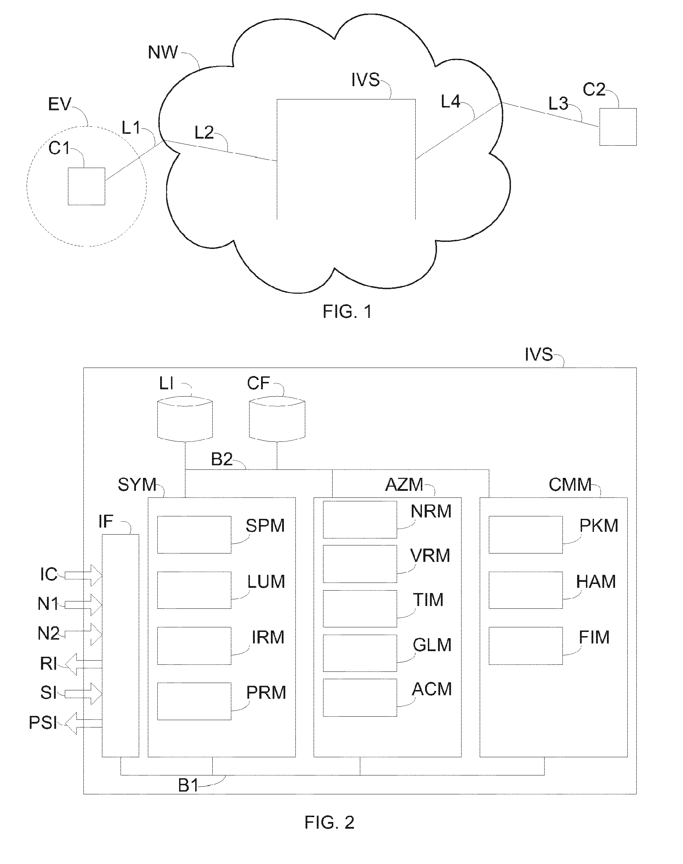

Referring to FIG. 1, a schematic block diagram of a communication network comprising an embodiment of an interactive voice system according to the invention is depicted.

A communication network NW is schematized as a simplified representation of larger communication network. In an embodiment, the communication network NW is a general purpose network. It is adapted to carry signaling or data traffic such as content or communication addressed to users. In an example, the communication network NW comprises circuit switch telephony services, allowing users to place and/or receive phone calls. In another example, the communication network NW comprises a packet switch network adapted to carry data packets such as signaling packets, data packets or voice packets. In another example, the communication network NW may be the Internet or a subpart thereof. The communication network NW may comprise fixed and wireless network architectures and a variety of access points that are not depicted on figure FIG. 1.

A caller terminal C1 operated by a first end user (not depicted on figure FIG. 1), said first end user being also referenced as "originator" hereinafter, is able to inter-operate with the communication network NW. In non limiting examples, the caller terminal C1 is a land line phone, or is mobile device such as a smartphone or a connected tablet or a connected smart watch. The caller terminal C1 is comprised in an environment EV. The environment EV comprises factors that could have an impact on the communication handled by the caller terminal C1. Said environment EV comprises for example the surroundings of the caller terminal C1, such as a crowded train station or a noisy car environment. The environment EV comprises also other factors from its interaction with the communication network NW that impact the quality of the communication. It may be for example a long distance between the caller terminal C1 and the access point of the communication network NW that degrades the quality of the communication.

The caller terminal C1 communicates with the communication network NW through a first link L1. Said first link L1 is a connection for exchanging messages and/or data with the communication network NW. In an example the first link L1 is a physical connection with between the communication network NW and the caller terminal C1. In another example the first link L1 is logical connection between the two entities.

A second link L2 further connects the caller terminal C1 to an interactive voice system IVS comprised in the communication network NW. The interactive voice system IVS will be described later on. Similarly to the first link L1, the second link L2 may be a physical connection between the first link L1 and the interactive voice system IVS or may be a logical connection between the two elements.

A called terminal C2 operated by a second user (not depicted on figure FIG. 1), said second end user being also referenced as "recipient" hereinafter, is also able to inter-operate with the communication network NW. In non limiting examples, the called terminal C2 is a voice over Internet Protocol (VoIP) client hosted by a personal computer, or is mobile device such as a smartphone.

The called terminal C2 communicates with the communication network NW through a third link L3. Said third link L3 allows the called terminal C2 and the communication network NW to interact by sending and/or receiving signaling messages or data packets, or by establishing voice circuits.

A fourth link L4 further connects the called terminal C2 to the interactive voice system IVS.

Similarly to the first link L1 or the second link L2, the third link L3 and the fourth link L4 may be physical connections or may be logical connections, enabling the called terminal C2 to communicate with the interactive voice system IVS.

It should be noted that figure FIG. 1 depicts a simplified schematic view of the communication network NW with a limited number of terminals. However the communication network NW encompasses in non limiting examples large number of sub-systems such as switch, routers or servers and is able to manage simultaneously a large number of terminals. Said number of terminals could be of a scale of hundreds of terminals in case the communication network NW is a private enterprise network, but it could be to the scale of a city in case the communication network NW is a public telephony network. It should be noted also that the communication network may be able to cooperate with heterogeneous technologies. The caller terminal C1 may use for example VoIP technology, whereas the called terminal C2 may use circuit-switch technology in case it is a landline phone.

Referring to figure **FIG. 2** a schematic block diagram of an embodiment of an interactive voice system according to the invention is depicted.

In an embodiment, the interactive voice system IVS is a system comprised in the communication network NW. Said interactive voice system IVS is a system for managing an incoming call IC originating from the caller terminal C1 and directed to the called terminal C2.

For managing said incoming call IC, the interactive voice system IVS comprises an interface module IF. Said interface module IF is a connection point for the second link L2 and the fourth link L4. The interface module IF is adapted to receive and/or send messages such as signaling messages or data packets related to incoming and/or outgoing calls, such as the incoming call IC originated by the caller terminal C1. Other messages are in an embodiment a first notification N1 sent by the called terminal C2, a second notification N2 sent to the caller terminal C1. The first notification N1 and the second notification N2 are described later on.

In an example the interface module IF is a device comprised in the interactive voice system IVS. In other examples, the interface module IF is hardware subpart of said interactive voice system IVS, or is a combination of hardware modules and software services from the interactive voice system IVS. Additionally, in another example the interactive voice system IVS may be further adapted to manage circuit switch calls.

The interactive voice system IVS further comprises a system management module SYM. It is adapted to schedule and execute tasks for managing incoming call. It is also further adapted to cooperate with others modules from the interactive voice system IVS such as an analyzer module AZM and a call management module CMM, that will be describe later on. Said cooperation comprises for example providing inputs, receiving outputs, triggering tasks to be performed. The cooperation between modules takes place by exchange of control and/or data messages through a first data bus B1, that connects the interface module IF, the system management module SYM, the analyzer module AZM and the call management module CMM together.

The system management module SYM comprises a speech to text module SPM. In an embodiment, it is adapted to process sound content from an incoming call, and more specifically the speech to text module is able to process voice from said incoming call. Said processing involves a conversion of voice speech into text. In an example, the speech to text module comprises means to subtract noise from sound content of an incoming call, and means to analysis and process resulting voice speech. The speech to text module may be a software service from the system management module SYM, or may be a dedicated hardware circuit or a combination of software routines executed by hardware parts. In another embodiment, the speech to text module SPM is also adapted to synthesize voice speech from text. For example, it may take text input parameters such as keywords and punctuation for generating a sentence synthesized into voice speech.

The system management module SYM comprises a list update module LUM. The list update module LUM is adapted for updating the content of an incoming calls management list LI. Said incoming call management list LI stores information related to the management of incoming calls. In an embodiment the incoming calls management list LI is accessed through a second data bus B2 that connects it to the system management module SYM. The incoming calls management list LI comprises a white list of incoming calls (not depicted on figure FIG. 2). Said white list may list for example authorized numbers or identifiers from incoming calls. The white list may also comprise a list of persons that are acknowledged to be trusted or to be important, each person from said list of persons being recognized according to a stored voice signature. The white list may also comprises a list of authorized situations such as tolerated noise environment, allowed time slots, allowed location etc. For example the list of authorized situations may indicate available timeslots for taking an incoming call. The authorized situations are advantageous to define an optimal context for a called user receiving an incoming call.

Conversely the incoming calls management list LI comprises a black list of incoming calls (not depicted on figure FIG. 2). It comprises information related to incoming calls that are undesirable. In examples, the black list comprises unauthorized phones identifiers or numbers, or indicates that a noisy environment of an incoming call is not tolerated above a specified threshold.

In an embodiment the incoming call management list LI is configured by the interactive voice system IVS after each managed incoming call. In another embodiment, the second end user operates the called terminal C2 for configuring the incoming call management list LI, in order for example to associate phone numbers or identifiers to label or contact names, and to assign them to the white list or black list of incoming calls.

The system management module SYM further comprises an information request module IRM. This module is adapted to generate a request for information RI addressed to the originator of the incoming call IC, the caller terminal C1. The content of the request of information RI is generated according to a configuration database CF comprised in the interactive voice system IVS. Said configuration database CF is available to be accessed through the second data bus B2 that connects said configuration database CF and the system management module SYM together. The configuration database CF comprises configuration parameters for the generation of the request RI. For example the configuration database CF may comprise a list of personal or professional information that are to be requested to the originator of the incoming call IC. Said list of personal or professional information may be converted into voice speech with interrogative sentences generated by the speech to text module SPM. Said interrogative sentences are directed to the originator of the incoming call IC, requesting him to decline his identity and the reasons for his call in an example.

The request module IRM is also enabled to adapt the request for information RI depending on the information available on the caller terminal C1. Said available information are for example conveyed to the request module IRM by the system management module SYM. In an example, it may be determined from an incoming call history that the caller terminal C1 has already tried to establish a call with the called terminal C2. In another example, it may be determined that the caller terminal C1 is calling from a foreign country. In such cases the request module IRM interrogates the configuration database CF for generating a specific request for information RI. If it is not the first time the caller terminal C1 is trying to call the called terminal C2, it is advantageous to adapt the request of information RI accordingly.

In another embodiment, the information request module IRM is adapted to request call back information to the originator of the incoming call IC. These call back information are information allowing the originator to be called back by the recipient of the incoming call IC, so they may comprise phone number or electronic identifier of the originator.

The system management module SYM further comprises a providing module PRM. It is adapted to provide the response to the request for information RI to the recipient of the incoming call IC. Said response is a set of information SI provided by the originator of the incoming call IC. The providing module PRM is adapted to provide to the recipient of the incoming call IC at least a portion PSI of the set of information SI derived from the set of information SI. The providing module PRM provides to the recipient of the incoming call IC either the full set of information SI, or filtered information from the set of information SI, or modified information of the set of information SI. The providing module PRM provides unidirectionally the at least portion PSI of set of information SI to the recipient of the incoming call IC. By unidirectionally, it is meant that the originator of the incoming call IC interacts with the interactive voice system IVS and not directly with the recipient of said incoming call IC. The recipient receives, in a transparent manner for the originator, the at least portion PSI of set of information SI. Such mechanism is intended to guarantee the privacy of the recipient of the incoming call, so that he can be aware of information provided by the originator of the incoming call without having to interact with him.

In an embodiment, the providing module PRM is adapted to provide in real-time the at least portion PSI of the set of information SI. It is meant by real-time that the information provided by the originator of the incoming call IC upon the request for information RI is provided simultaneously to the recipient of the incoming call IC.

In another embodiment, the providing module PRM is further adapted to cooperate with the speech to text module SPM in order to convert the set of information that comprises voice speech of the originator of the incoming call IC into an informative text comprising information provided by said originator. The providing module PRM is also adapted to provide to the recipient of the incoming call IC the at least portion PSI of the set information SI which is then the text generated from the voice speech conversion achieved by the cooperation of the providing module PRM with the speech to text module SPM. Providing the at least portion PSI of the set of information IS in a text form is advantageous for the recipient of the incoming call IC since it happens often that it is faster to read a short text summary instead of listening the information provided by the originator.

In an embodiment, the interactive voice system IVS further comprises the analyzer module AZM. The analyzer module AZM is linked with the configuration database CF trough the second data bus B2, and linked with the system management module SYM through the first data bus B1. It allows the analyzer module AZM and the system management module SYM to cooperate together. The analyzer module AZM provides analysis services to the system management module SYM. Said analysis services are directed to analyze the environment EV of the incoming call IC.

The analyzer module AZM comprises a noise recognition module NRM. The noise recognition module NRM is adapted to process the incoming call IC for performing a noise analysis. Such noise may be background noise from the surroundings of the originator from the incoming call IC, but could be also noise generated by a bad connection on the first link L1 or on the second link L2 in case the starting point of the incoming call IC is an analog circuit switch call. The noise recognition module NRM is adapted to analyze and recognize noise. In an embodiment it is able to categorize noise from the incoming call IC. It may for example perform a noise recognition and categorize the noise as being background noise from a call center platform that comprises multiple permanent background voices. It may also recognize and categorize noise from the incoming call IC as belonging to a subway environment or vehicle environment in case the originator of the incoming call IC is riding in a subway or is driving.

In an embodiment, the noise recognition module NRM is adapted to cooperate with the speech to text module SPM for subtracting noise component from the incoming call IC in order to convert into text the voice speech comprised in the incoming call IC.

The analyzer module AZM further comprises a voice recognition module VRM. Said voice recognition module is a module for processing the voice from an incoming call IC and to perform a search on the identity of the originator. The analyzer module AZM is able to determine a voice signature from the originator of the incoming call IC and to interrogate the incoming calls management list LI for checking if said voice signature is known. In case it is known it may belong to the white list or to the black list from the incoming calls management list LI allowing the interactive voice system IVS to react accordingly. In case the voice signature is unknown, the voice recognition module VRM may store it into the incoming calls management list LI for a future use.

The analyzer module AZM further comprises a time module TIM, which is a module for managing date and time related to incoming call. In an example the time module TIM is adapted to determine date and time of the incoming call and to check authorized time slots for incoming call that are stored in the incoming calls management list LI.

The analyzer module AZM also comprises a geo-localization module GLM. It is a module to determine either the location of the originator of the incoming call IC or the location of the recipient of the incoming call IC. In an example the geolocalization module GLM is adapted to cooperate with the terminals from the originator or the recipient for determining their respective locations. In another example, the geo-localization module GLM is enabled to determine the route taken by an incoming call IC to reach the interactive voice system IVS, and then to determine an approximate area wherein the incoming call IC originates. Similarly the geo-localization module GLM is enabled to determine an approximate location of the recipient of the incoming call IC by determining the route taken by the messages exchanged with the terminal of said recipient. If the geo-localization module GLM is able to determine one of the locations, it can then interact with the incoming calls management list LI to check if the determined location is categorized in one of the white list or the black list.

The analyzer module AZM also comprises an accuracy module ACM. Said accuracy module cooperates with the modules comprised in the analyzer module AZM and is adapted to determine an accuracy indicator from metrics provided by said modules from the analyzer module AZM. The accuracy indicator is derived from said metrics that relates to the confidence and/or the uncertainty of the information determined by said modules.

In an embodiment, the interactive voice system IVS further comprises the call management module CMM. It provides to the interactive voice system IVS the ability to perform operation on incoming and/or outgoing calls.

The call management module CMM comprises a parking module PKM. Said parking module PKM is a module that allows to park incoming call IC on a park server, not depicted on figure FIG. 2. The park server is a server adapted for holding the incoming call IC into a wait state. For example once the incoming call IC is park on the park server by the parking module CMM, the originator of said incoming call IC is informed that he has to wait on said park server before further proceedings. The parking module PKM may configure the park server to broadcast waiting music to the originator of the incoming call IC interlaced with audible announcements requesting him to be patient.

The call management module CMM further comprises a call handling module HAM. The call handling module HAM provides call handling functionalities to the call management module CMM, and therefore to the interactive voice system IVS. In an example, the call handling module HAM is adapted to take calls such as the incoming call IC. In another example, the call handling module HAM is also able to reject the incoming call IC. In an embodiment the call handling module HAM is adapted to hand over the incoming call IC to its recipient.

The call management module CMM further comprises a filtering module FIM. Said filtering module FIM is a module to filter incoming calls such as the incoming call IC. It cooperates with the configuration database CF and the call handling module HAM to apply filtering rules on incoming calls.

It should be noted that it is made reference herein above to the originator of the incoming call IC directed to the recipient, but the interactive voice system IVS is not limited to a single pair of originator and recipient. The interactive voice system IVS, which is described with the system management module SYM, the analyzer module AZM, the call management module CMM, the database configuration CF and the incoming calls management list LI, is adapted to process numerous originators placing incoming calls to numerous recipients. For example, the incoming calls management list LI is a database comprising as many entries as possible recipients, each entry storing incoming calls management information or a set of rules for a particular recipient. Similarly the configuration database CF comprises configuration parameters dedicated to each possible recipient, and also default configuration parameters for first time recipients.

It should also be noted that embodiments from figure FIG. 2 describes a non limiting arrangement of the functionalities of the modules comprised in the interactive voice system IVS. Other arrangements are of course possible. In an example the functionalities of the respective call management module HAM and system management module SYM are comprised in a single module that cooperates with the analyzer module AZM. In another possible arrangement, the first data bus B1 and the second data bus B2 are merged into a single data bus used for interconnecting the modules from the interactive voice system IVS.

The various modules comprised in the interactive voice system IVS are preferably a combination of hardware devices with software routines. In another embodiment the interactive voice system IVS is a software entity, comprised in an Internet Protocol Multimedia Subsystem (IMS), and adapted for receiving and managing incoming calls directed to the recipient.

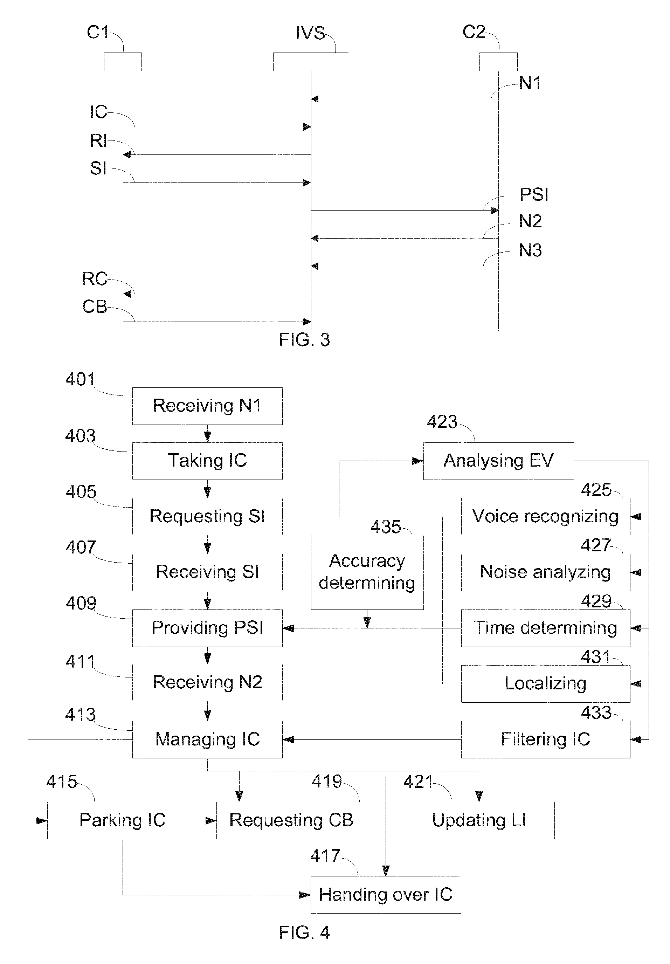

Referring to figure **FIG. 3****,** a flowchart showing messages exchanged in an embodiment of an interactive voice system according to the invention is depicted.

Not depicted on figure FIG. 3, the originator or first end user operates the first caller terminal C1 to initiate the incoming call IC directed to the recipient or the second end user using its called terminal C2.

The first notification N1 is a message sent by the called terminal C2 to the interactive voice system IVS. The first notification N1 is a notification instructing the interactive voice system IVS to take the incoming call IC. The first notification N1 is processed by the system management module SYM. In an example, the first notification N1 is a message comprising control codes to be analyzed by the system management module, said control codes corresponding to an action to be executed by the interactive voice system IVS and comprising identifiers of the incoming call IC. Upon the first notification N1, the incoming call IC is routed from the caller terminal C1 to the interactive voice system IVS.

The request for information RI is a message sent by the interactive voice system IVS to the caller terminal C1. The request for information RI is initiated by the system management module SYM and comprises a request addressed to the originator to decline his identity and the reasons for his incoming call IC. In an example said request is an automatically generated voice speech. The request for information RI may also comprise control and signaling codes for routing the request for information RI up to the caller terminal C1.

The set of information SI is a message sent by the caller terminal C1 to the interactive voice system IVS. The set of information SI comprises the information provided by the caller terminal C1, responding to the request for information RI. Said information may be an audio record or a live stream of the voice of the originator that operates the caller terminal C1. In such case the connection between the caller terminal C1 and the interactive voice system IVS is a communication channel for routing the set of information SI in real-time to the interactive voice system IVS.

The at least portion PSI of the set of information SI is a message sent by the interactive voice system IVS to the called terminal C2. The at least portion PSI comprises partial information from the set of information SI in an example. In other examples, the at least portion comprises modified information from said set, or full information from said set. The at least portion PSI may comprise an audio record from the originator in which he has declined his identity and the motivation of his incoming call IC. In a preferred embodiment, the at least portion PSI of the set of information SI is a real-time streaming of the response of the originator as he responds to the request for information RI.

The second notification N2 is a message sent by the called terminal C2 to the interactive voice system IVS. It is a notification intended to the interactive voice system IVS and related to the incoming call IC. The second notification N2 indicates to the interactive voice system IVS how to further manage the incoming call IC. The second notification N2 is determined according to the at least portion PSI of the set of information PSI. The content of the at least portion PSI, such as the identity of the originator and the reasons for his incoming call, defines the possible second notification N2. In an example, the second notification N2 comprises control and signaling information indicating further steps to be performed by the interactive voice IVS.

A third notification N3 is a message sent by the called terminal C2 to the interactive voice system IVS. It comprises further indications directed to the interactive voice system IVS to further process the incoming call IC. In an example, the third notification N3 comprises instructions for the interactive voice system IVS for managing the incoming call IC.

A request for call back information RC is a message sent by the interactive voice system IVS to the caller terminal C1. It requests the first end user operating the caller terminal C1 to provide information on how to get back to him. Such information could comprise for example a preferred mean of communication and the associated identifier or phone number, available time slot for contacting him.

A call back information message CB is a message received by the interactive voice system IVS from the caller terminal C1. It comprises the call back information requested by the request for call back information CB. In an example the call back information message comprises one or more phone numbers or an email address allowing the originator of the incoming call IC to be contacted.

Referring to figure **FIG. 4****,** a flowchart showing steps performed in an embodiment of the method according to the invention is depicted.

Not depicted on figure FIG. 4, the first end user, also referenced as the originator, operates the caller terminal C1 to issue the incoming call IC as he wants to reach the second end user also referenced as the recipient who is operating the caller terminal C2. The second end user is informed that the incoming call IC is addressed to him but the identifier from the caller terminal C1 is either not known from the second end user, or the identifier is obfuscated, for example using a private phone number. For keeping privacy of the second end user, the method for managing the incoming call IC is then performed.

In the **step 401,** the called terminal sends the first notification N1 which is received by the interactive voice system IVS. In an example, the first notification N1 is received by the interface module IF and processed by the system management module SYM.

In the **step 403,** the first notification N1 instructs the interactive voice system IVS to take the incoming call IC. In an example the taking of the incoming call IC is performed by the cooperation of the system management module SYM and the call management module CMM.

In the **step 405,** the interactive voice system IVS requests to the caller terminal C1 the set of information SI. In an example said request is conveyed from the interactive voice system IVS to the caller terminal C1 through the request for information RI message that is initiated by the system management module SYM. The conveying of the request for information RI message may be performed by the interface module IF.

In the **step 407,** the interactive voice system IVS receives the set of information SI from the caller terminal C2. In an example, the originator declines his identity and the reasons for his calling in the set of information SI.

In the **step 409,** the system management module SYM provides unidirectionally the at least portion PSI of the set of information SI to the called terminal C2. The at least portion PSI comprises the parts of the set of information SI that could be modified for example. In a preferred embodiment, this step of providing 409 is performed in real-time. As the first end user declines his identity and the motivation of the incoming call IC, the audio stream is provided to the second end user through the called terminal C2. As the real-time providing is performed unidirectionally it allows isolating the second end user from the first end user, and hence to guarantee the privacy of said second end user. In another preferred embodiment, the step of providing 409 modifies the set of information SI for converting the voice speech of the originator into a text to be embedded into the at least portion PSI of the set of information SI. In an example such conversion is performed by the speech to text module SPM from the system management module SYM. The at least portion PSI is then provided to the called terminal C2 and presented to the recipient of the incoming call IC. In an example the full voice speech of the originator is converted into text and provided to the called terminal C2 in real-time. In another example the voice speech of the originator is summarized into a short text that advantageously allows the recipient to easily take knowledge of the identity of the originator and why he tries to reach him.

In the **step 411,** the interactive voice system IVS receives the second notification N2 from the called terminal C2. The second notification N2 is issued by said called terminal C2 upon the receiving of the at least portion PSI of the set of information SI and is then processed by the system management module SYM. In an example, the called terminal C2 processes the at least portion PSI and generates the second notification N2 accordingly. In another example, the recipient of the incoming call IC may be able to identify the originator based on the received at least portion PSI and then consider that the incoming call IC is of interest. In that case the second notification N2 may comprise indication to further manage the incoming call IC.

In the **step 413,** the call management module CMM manages the incoming call IC according to its cooperation with the system management module SYM that has processed the second notification N2. In an example, the second notification N2 comprises control codes such as Dual-Tone Multi-Frequency (DMTF) signaling codes mapped to functions of the call management module CMM. It should be noted that in case the interactive voice system IVS does not receive the second notification N2, the call management module CMM may trigger default actions regarding the management of the incoming call IC.

In the **step 415,** in an embodiment, upon the step of managing 413 the incoming call IC, the second notification N2 instructs the interactive voice system IVS to park the incoming call IC on the park server. In another embodiment, upon the step of receiving 407 the set of information SI, the interactive voice system IVS operates the parking module PKM from the call management module CMM for parking the incoming call IC on said park server. Such operations are useful for having the originator of said incoming call IC to be informed that he has to wait temporarily.

In the **step 417,** in an embodiment, upon the step of managing 413 the incoming call IC, the interactive voice system IVS operates the call handling module CMM for handing over the incoming call IC to the called terminal C2. In an example, the at least portion PSI of the set of information SI allows the second end user operating the called terminal C2 to identify the first end user and to decide to answer the incoming call C2. In such case the interactive voice system IVS hands over the incoming call IC to the called terminal C2.

In the **step 419,** in an embodiment, upon the step of managing 413 the incoming call IC, the second notification N2 indicates to the interactive voice system IVS to send the request for call back information RC to the caller terminal C1. In another step not depicted on figure FIG. 4, the caller terminal C1 provides said call back information by sending the call back information message CB to the interactive voice system IVS. In case he is busy, it is advantageous for the recipient of the incoming call IC to easily instruct the interactive voice system IVS to collect the call back information of the originator. In another embodiment, upon the step 415 of parking the incoming call IC, the interactive voice system IVS performs the step 419 of requesting call back information. In an example, if the incoming call IC is parked for too long on the park server, the expiry of a timer may conduct the interactive voice system IVS to automatically send the request for call back information RC to the caller terminal C1.

In the **step 421,** in an embodiment, upon the step of managing 413 the incoming call IC, the interactive voice system IVS updates the incoming call management list LI. The second notification N2 indicates how the incoming call IC is to be managed, which is valuable information to be stored in said incoming call management list LI. In an example if the identifier from the caller terminal C1 is unknown but the recipient of the incoming call IC is able to recognize the originator thanks to the at least portion PSI of the set of information SI, it is worth storing in the incoming management list LI that said identifier is belongs to the authorized list of callers.

In the **step 423,** in yet another embodiment, in conjunction with the step 405 of requesting the set of information SI to the caller terminal C1, the interactive voice system IVS performs a step of analyzing the environment EV of the caller terminal. The analysis of the environment EV is performed while the request for information RI is pending, and if needed is also performed while the step of receiving 407 the set of information SI. Said analysis of the environment EV is performed by the analyzer module AZM for defining the characteristics of said environment EV.

The step of analyzing 423 the environment EV comprises, in an embodiment, the **step 425** of voice recognizing. The voice recognizer module VRM processes the incoming call IC to determine a voice signature and interrogates the incoming management list LI with said voice signature to check if the originator is a known caller. In case the voice signature corresponds to a known originator, then it is advantageous to inform the called terminal C2 through the at least portion SI of the set of information SI.

The step of analyzing 423 the environment EV further comprises, in an embodiment, the **step 427** of noise analyzing. The noise recognition module NRM performs the step of noise analyzing 427. In an example a noise signature is determined and is compared to noise signatures stored in incoming call management list LI. If the determined noise signature corresponds to a call center noise signature, then it is advantageous to inform the called terminal C2 through the at least portion SI of the set of information SI. Furthermore the step of noise analyzing determines also the amplitude of the noise, which should be in a range that is defined by the configuration database CF in an example. In such case, the noise recognition module provides the results of the analysis to the filtering module FIM.

The step of analyzing 423 the environment EV further comprises, in an embodiment, the **step 429** of time determining. This step is performed by the time module. The time module retrieves the time and date of the incoming call IC. Said time module interrogates the incoming call management list LI for checking if the incoming call IC is happening in an authorized or forbidden time slot in an example. The result of this check is communicated to the filtering module FIM.

The step of analyzing 423 the environment EV further comprises, in an embodiment, the **step 431** of localizing. In this step, the geo-localization module GLM cooperates with the caller terminal C1 to determine its location. If direct cooperation is not possible, the geo-localization module GLM cooperates with network elements from the communication network NW to determine an approximate position or area wherein the caller terminal C1 may be located. The localization information of the caller terminal C1 is advantageous to manage incoming call from unknown originator. For example, the recipient of an unknown incoming call may want to black list any calls incoming from a specific area code or region. In another embodiment the geo-localization module GLM is able to cooperate with the called terminal C2 to determine its location. The geo-localization module GLM is also adapted to determine approximate location of the called terminal C2 by cooperating with network elements from the communication network NW. Advantageously the location information of the called terminal C2 help to manage the incoming call IC. The second end user may for example configure the interactive voice system with his preferred locations wherein he can receive any calls and some other his locations wherein unknown incoming calls have to be managed specifically.

The step of analyzing 423 the environment EV further comprises, in an embodiment, **the step 433** of filtering the incoming call IC. This step is performed by the filtering module FIM that takes as input the results of the processing of the steps such as the voice recognizing step 425, or the noise analyzing step 427, or the time determining step 429, or the localizing step 431. In the filtering step 433, the environment analysis are considered with respect to either the incoming call management list LI or the configuration database CF, in order to check if conditions are met for applying a rule on the incoming call IC, said rule being comprised in the set of rules from the incoming calls management list LI.

The step of analyzing 423 the environment EV further comprises, in an embodiment, **the step 435** of determining an accuracy indicator. This step is performed by the accuracy module ACM. The accuracy module is provided with metrics computed in the previous steps of the step of analyzing 423 the environment 423. Such metrics are for example related to confidence or uncertainties of the analysis of the environment EV. The step 425 of voice recognizing may establish an uncertainty metric when the voice signature that matches the most the originator's voice is only a partial match. Another uncertainty metric may be also evaluated in the steps of geo-localization or in the step of noise analyzing. Such uncertainty metrics are then provided to the accuracy module ACM for determining the accuracy indicator which is provided into the at least portion PSI of the set of information SI. The accuracy indicator advantageously provides indication on the confidence of the at least portion PSI of the set of information SI. In case said accuracy indicator indicates the confidence is low, then the called terminal C2 is informed that the determined identity of caller terminal C1 may be incorrect. The step 435 of determining the accuracy indicator may also be performed in cooperation with the step 433 of filtering the incoming call IC. In case the accuracy indicator indicates that the accuracy of the at least portion PSI of the set of information SI is too low, the filtering module FIM may apply a specific rule on the incoming call IC.

In an example, in a first scenario, the called terminal C2 is ringing as the second end user is receiving the incoming call IC, which identifier is unknown from the second end user. The called terminal C2 offers the second end user to take the incoming call IC or to enable a privacy mode. By selecting said privacy mode, the first notification N1 is generated from the called terminal C2 to the interactive voice system IVS. The above steps are then performed for resolving the first end user's identity and motives, and for managing the incoming call IC.

In another example, in a second scenario, the first end user and the second end user know each other, but the first end user is not using his regular communications means. The first end user may then operate the caller terminal C1 to generate a specific notification intended to the interactive voice system IVS in order to provide information related to his identity and reasons for calling. The called terminal C2 may be then provided with these collected information.

In an embodiment the interactive voice system IVS is a network element comprised in an Internet Protocol Multimedia Subsystem (IMS) architecture and the Session Initiation Protocol (SIP) specified by the Request For Comments (RFC) 3261 is used. The incoming call IC is an IMS call that is transmitted over the IMS infrastructure of the communication network NW. The called terminal C2 triggers the unknown incoming call functionalities and the incoming call IC is redirected through a SIP redirection to the interactive voice system IVS. In the SIP context, the first notification N1 may be an updated existing SIP message or a new SIP message associated with the "busy" SIP message for directing the incoming call IC to the interactive voice system IVS. Similarly the request for information RI and the set of information SI and other exchanged messages may be new SIP messages or updated existing SIP messages.

In another embodiment, the interactive voice system IVS is a device from a voice mail system. In an example, such voice mail system is based on a circuit switch architecture. In another example a voice mail system is integrated into a communication provider and offers remote voice mail capabilities such as mobile voice mail. Once the second end user receives the unknown incoming call IC on his called terminal C2, said called terminal C2 notifies the voice mail system with the first notification N1 that the interactive voice system is requested to manage the incoming call IC. The voice mail system triggers the functionalities from the interactive voice system IVS as described herein above. However the voice mail system needs to initiate two calls for managing the incoming call, a first call between the caller terminal C1 and the voice mail system, and a second call between the called terminal C2 and the voice mail system. This mechanism of double calls allows providing in real-time to the called terminal C2, the information provided by the first end user through the caller terminal C1.

The interactive voice system IVS is a system for managing incoming call. It offers means for the recipient of an unknown incoming call to efficiently keep his privacy. Advantageously the recipient is enabled to collect on his called terminal information related to the identity of the originator and the reasons for his call. The called terminal is adapted to receive such identity and motivation information in real-time and transparently with respect to the originator. The recipient may be fed also with enriched information extracted from the incoming call management list which is updated on each managed incoming call. Said incoming call management list may also ease the identification of the originator with the analysis performed by the analyzer module. Said analyzer module is enabled to compare voice signatures for example, and may then recognize the voice of a known person, that could be on the white list of caller or on the black list. Thanks to the features from the interactive voice system IVS, the recipient is able to safely receive incoming call without the need to interact with potential undesirable callers.

The interactive voice system IVS offers centralized services addressed to a user. Said user may use multiple communication devices, each device being attached to an identifier and being manageable by the interactive voice system IVS. The user can benefit from the privacy protection offered by the invention either when he is using a fixed land line at his home but also when he is in mobility situation while using a mobile device. The interactive voice system IVS advantageously manages information related to multiple devices from the same user. It is then a practical and flexible solution for the user to be able to user the functionalities of the interactive voice system IVS to keep his privacy without missing important incoming calls.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for managing an incoming call (IC) originating from a caller terminal (C1) operated by a first end user, said incoming call (IC) being addressed to a called terminal (C2) operated by a second end user, said method comprising the following steps performed by an interactive voice system (IVS):
- receiving (401) a first notification (N1) from the called terminal (C2) for taking (403) the incoming call (IC),
- requesting (405) to the caller terminal (C1), through a request for information (RI), information related to the identity of the first end user,
- receiving (407) a set of information (SI) from the caller terminal (C1), said set of information (SI) being related to the identity of the first end user,
- providing (409) unidirectionally to the called terminal (C2) at least a portion (PSI) of the set of information (SI),
- receiving (411) a second notification (N2) from the called terminal (C2) for managing (413) the incoming call (IC), said second notification (N2) being determined according to the at least portion (PSI) of the set of information (SI).

2. A method according to claim 1, wherein upon the step of providing (407) unidirectionally to the called terminal the at least portion (PSI) of the set of information (SI), a step of parking (415) the incoming call (IC) on a park server (PS) is performed.

3. A method according to any of the claims 1 to 2, wherein the step of managing (413) the incoming call (IC) comprises a step of handing over (417) the incoming call (IC) to the called terminal (C2).

4. A method according to any of the claims 1 to 3, wherein the step of managing (413) the incoming call (IC) further comprises a step of parking (415) the incoming call (IC) on the park server (PS) is performed.

5. A method according to any of the claims 1 to 4, wherein the step of managing (413) the incoming call (IC) further comprises a step of requesting (419) call back information (CB) from the caller terminal (C1).

6. A method according to any of the claims 1 to 5, wherein upon the step of managing (413) the incoming call (IC), a step of updating (421) an incoming call management list (LI) is performed.

7. A method according to any of the claims 1 to 6, wherein the at least portion (PSI) of the set of information (SI) comprises a voice to text conversion of a voice speech related to the identity of the first end user.

8. A method according to any of the claims 1 to 7, wherein the request for information (RI) is adapted according to the available information related to the caller terminal (C1).

9. A method according to any of the claims 1 to 8, wherein the step of requesting (405) to the caller terminal (C1) information related to the identity of the first end user further comprises a step of analyzing (423) the environment (EV) of the caller terminal (C1).

10. A method according to claim 9, wherein the step of analyzing (423) the environment (EV) of the caller terminal (C1) further comprises steps selected from the group consisting of a step of voice recognizing (425), a step of noise environment analyzing (427), a step of date and time determining (429), a step of localizing (431) and a step of accuracy determining (435).

11. A method according to claim 6 and any of the claims 9 to 10, wherein the incoming call management list (LI) comprises a set of rules related to the environment (EV) of the caller terminal (C1), and wherein the step of analyzing (423) the environment (EV) further comprises a step of filtering (433) the incoming call (IC) according to said set of rules.

12. A method according to any of the claims 9 to 11, wherein the step of analyzing (423) the environment (EV) of the caller terminal (C1) further comprises a step of providing the result of said step of analyzing (423) the environment of the caller terminal (C1) to the called terminal (C2).

13. An interactive voice system (IVS) for managing an incoming call (IC) originating from a caller terminal (C1) operated by a first end user, said incoming call (IC) being addressed to a called terminal (C2) operated by a second end user, said interactive voice system (IVS) comprising:
- a system management module (SYM) adapted:
o for processing a first notification (N1) from the called terminal (C2) for taking the incoming call (IC),
o for requesting to the caller terminal (C1), through a request for information (RI), information related to the identity of the first end user,
o for receiving the set of information (SI) from the caller terminal (C1),
o for providing unidirectionally to the called terminal (C2) at least a portion (PSI) of the set of information (SI),
o for processing a second notification (N2) from the called terminal (C2) for managing the incoming call (IC), said second notification (N2) being determined according to the at least portion (PSI) of the set of information (SI),
- a call management module (CMM) adapted:
o for taking the incoming call (IC),
o for managing the incoming call (IC).

14. An interactive voice system IVS according to claim 13 wherein the interactive voice system (IVS) is comprised in an Internet Protocol Multimedia Subsystem "IMS" architecture.

15. An interactive voice system (IVS) according to claim 13 wherein the interactive voice system (IVS) is comprised in a voice mail system.
